# EUROPÄISCHE PATENTANMELDUNG

(11) **EP 1 247 577 A2**
(43) Veröffentlichungstag der Anmeldung: **09.10.2002**
(21) Anmeldenummer: 02002154.9
(22) Anmeldetag: 29.01.2002
(51) Int. Cl.: B01L 3/02, G01N 21/43, B81B 1/00

(54) **System zur Detektion von Fluiden in einem mikrofluidischen Bauteil**

(30) Priorität: 04.04.2001 DE 10116674
(71) Anmelder: EPPENDORF AG, 22339 Hamburg (DE)
(72) Erfinder: Huhn, Rüdiger, Dipl.-Ing., 23560 Lübeck (DE); Sander, Dietmar. Dr. Ing., 21502 Geesthacht (DE); Graff, Andreas, Dipl.-Ing., 22177 Hamburg (DE); Timmann, Lutz, Dipl.-Ing., 24576 Bad Bramstedt (DE)
(74) Vertreter: Patentanwälte Hauck, Graalfs, Wehnert, Döring, Siemons, Schildberg

(57) **Zusammenfassung**

System zur Detektion von Fluiden in einem mikrofluidischen Bauteil mit folgenden Merkmalen:
- das mikrofluidische Bauteil (1) weist mindestens einen Mikrokanal (4) mit einer Begrenzungswand (2,3) auf, die in einem transparenten Bereich dem Mikrokanal zugewandt zwei spitzwinklig zueinander geneigte Flächen hat,
- ein Lichtsender (6) und ein Lichtempfänger (7), die außerhalb des Bauteils angeordnet sind, sind so auf die geneigten Flächen (3',3'') in dem transparenten Bereich der Begrenzungswand gerichtet, daß ein vom Lichtsender ausgesandter Lichtstrahl (8) bei Anliegen eines Gases im Mikrokanal an den beiden Flächen nach Totalreflexion an den beiden Flächen auf den Lichtempfänger trifft und beim Anliegen von Flüssigkeit im Mikrokanal an mindestens einer der beiden Flächen in den Mikrokanal eintritt und hierdurch der Lichteinfall in den Lichtempfänger reduziert oder unterbunden wird.

## Beschreibung

Die Erfindung bezieht sich auf ein System zur Detektion von Fluiden in einem mikrofluidischen Bauteil.

Mikrofluidische Bauteile im Sinne dieser Anmeldung sind Bauteile mit mindestens einem Mikrokanal zum Speichern und/oder Leiten von Fluiden, d.h. Flüssigkeiten und/oder Gasen. Die Mikrokanäle können auch als kapillare Mikrokanäle bezeichnet werden. Zusätzlich können diese mikrofluidischen Bauteile weitere Mikrostrukturen aufweisen, beispielsweise Mikropumpen, Mikroaktoren, Mikrosensoren etc.. Mikrofluidische Bauteile sind gekennzeichnet durch charakteristische Querabmessungen der Mikrokanäle (z.B. Durchmesser oder hydraulischer Durchmesser oder Breite und Höhe) von maximal etwa 1500 µm (vorzugsweise maximal etwa 500 µm) und minimal etwa 5 µm (vorzugsweise minimal etwa 10 µm). Die Mikrokanäle können auch als kapillare Mikrokanäle bezeichnet werden. Die charakteristischen Abmessungen weiterer Mikrostrukturen können ebenfalls in den vorgenannten Bereichen angesiedelt sein. Sie können insbesondere aus Halbleitern und/oder Kunststoffen und/oder Glas und/oder Keramik und/oder Metallen hergestellt sein, wobei geeignete Fertigungsverfahren der Mikrotechnik bzw. Mikrostrukturierung zum Einsatz kommen können, z.B. Lithographie und Ätzverfahren (bei Halbleitern) oder Liga-Verfahren (bei Metallen, Kunststoffen und Keramiken).

In mikrofluidischen Bauteilen ist der Zustand der Befüllung mit einem Fluid bzw. Entleerung nicht ohne weiteres kontrollierbar, obgleich dies in vielen Fällen wünschenswert wäre. So wäre es beispielsweise hilfreich, den Befüll- bzw. Entleerungszustand eines Mikrodosiersystems zu kennen, um Fehldosierungen zu vermeiden. Bei Stößen auf ein mikrofluidisches Bauteil können Gasblasen entstehen, die zu Funktionsstörungen des mikrofluidischen Bauteiles führen können.

In der WO 99/10099 sind verschiedene Mikrodosiersysteme beschrieben, die einen Freistrahldosierer bzw. eine Mikromembranpumpe umfassen. Eines dieser Mikrodosiersysteme hat ein Reservoir, eine Mikromembranpumpe, deren Eingang mit dem Reservoir verbunden ist, eine mit dem Ausgang der Mikromembranpumpe verbundene Dosieröffnung und eine mit der Mikromembranpumpe in Wirkverbindung stehende Dosiersteuerung, wobei Mikromembranpumpe und Reservoir in Mikrosystemtechnik oder Hybridtechnik zu einem auswechselbar mit einem Betätigungsmodul verbundenen Bauteil zusammengefaßt sind. Die Dosiersteuerung steuert das Dosiervolumen über das Schlagvolumen der Mikromembranpumpe. Ferner ist die Dosiersteuerung zur Einstellung einer Ausgangsposition für die Verschiebung der Flüssigkeitssäule mit einem Sensor zur Detektion des Meniskus der Flüssigkeit am Anfang einer Verschiebestrecke der Flüssigkeit verbunden. Der Sensor ist einem Abgaberöhrchen für die Flüssigkeit zugeordnet. Beim ersten Dosierschritt pumpt die Mikromembranpumpe Flüssigkeit aus dem Reservoir bis der Sensor den Meniskus detektiert und damit eine definierte Nullstellung erreicht. Danach wird die Dosiermenge über das bekannte Schlagvolumen der Mikromembranpumpe gesteuert. Bei weiteren Dosierungen kann die Dosiersteuerung davon ausgehen, daß die Flüssigkeitssäule am Ende des Abgaberöhrchens ansteht. Bei diesem Mikrodosiersystem wird nur zu Betriebsbeginn die Bereitschaft zu Dosierungen festgestellt. Da die Dosiermenge über das bekannte Schlagvolumen gesteuert wird, kann es zu Fehldosierungen kommen, wenn die Mikromembranpumpe Lufteinschlüsse fördert oder das Reservoir erschöpft ist.

Außerdem ist die Detektion der sich bewegenden Grenzfläche zwischen flüssigen und gasförmigen transparenten Medien mittels des optischen Sensors problematisch.

Die optische Messung wird insbesondere durch Streuungs- und Brechungseffekte und den geringen Signalhub beeinträchtigt. Die Messung ist auf eine Detektion der Grenzfläche beschränkt und kann nicht unterscheiden, ob gerade Flüssigkeit oder Luft am Sensor ansteht.

Davon ausgehend liegt der Erfindung die Aufgabe zugrunde, ein System zur Detektion von Fluiden in einem mikrofluidischen Bauteil zu schaffen, das ein günstigeres Meßsignal liefert und eine Unterscheidung zwischen Flüssigkeiten und Gasen ermöglicht.

Die Aufgabe wird durch ein System mit den Merkmalen des Anspruches 1 gelöst. Vorteilhafte Ausgestaltungen des Systems sind in den Unteransprüchen angegeben.

Das erfindungsgemäße System zur Detektion von Fluiden in einem mikrofluidischen Bauteil hat folgende Merkmale:
- das mikrofluidische Bauteil weist mindestens einen Mikrokanal mit einer Begrenzungswand auf, die in einem transparenten Bereich dem Mikrokanal zugewandt zwei spitzwinklig zueinander geneigte Flächen hat,
- ein Lichtsender und ein Lichtempfänger, die außerhalb des Bauteils angeordnet sind, sind so auf die geneigten Flächen in den transparenten Bereich der Begrenzungswand gerichtet, daß ein vom Lichtsender ausgesandter Lichtstrahl beim Anliegen eines Gases im Mikrokanal an den beiden Flächen nach Totalreflexion an den beiden Flächen auf den Lichtempfänger trifft und beim Anliegen von Flüssigkeit an mindestens einer der beiden Flächen in den Mikrokanal eintritt und hierdurch der Lichteinfall in den Lichtempfänger reduziert oder unterbunden wird.

Die Erfindung nutzt aus, daß an der Grenze von einem optisch dichteren zu einem optisch dünneren Medium ein von den Brechungsindizes der beiden Medien abhängiger Grenzwinkel existiert, so daß ein im dichteren Medium auf die Grenze zum dünneren Medium einfallender Lichtstrahl, dessen Einfallswinkel den Grenzwinkel überschreitet, an dieser Grenze vollständig reflektiert wird (Totalreflexion). Ferner macht sie sich zunutze, daß der Grenzwinkel beim Übergang von einem transparenten Festkörper (z. B. aus Kunststoff oder Glas) zu Luft oder einem anderen Gas kleiner ist als der Grenzwinkel beim Übergang zu einer Flüssigkeit. Lichtsender und Lichtempfänger sind deshalb so auf die spitzwinklig zueinander geneigten Flächen des transparenten Bereichs der Begrenzungswand, d.h. des optisch dichteren Bereichs ausgerichtet, daß bei Anliegen eines Gases an beiden Flächen Totalreflexion erfolgt und der Lichtstrahl vollständig in den Lichtempfänger gelangt. Dabei wird durch die Neigung der Flächen zueinander sichergestellt, daß der reflektierte Lichtstrahl von der einen zur anderen Fläche gelangt. Bei Anliegen von Flüssigkeit an mindestens einer der Flächen tritt der Lichtstrahl in den Mikrokanal ein, so daß der Lichtempfänger ein deutlich reduziertes oder gar kein Lichtsignal mißt. Infolgedessen ist mit dem erfindungsgemäßen System feststellbar, ob an den Flächen ein Gas oder eine Flüssigkeit anliegt und ist zudem feststellbar, ob eine Grenzfläche zwischen einem Gas und einer Flüssigkeit an den Flächen vorbeiwandert. Dadurch, daß der Mikrokanal bzw. kapillare Mikrokanal sehr geringe Querabmessungen hat, bildet sich ein gleichmäßiger Meniskus zwischen Flüssigkeit und Gas aus und entstehen an den geneigten Flächen weder Tröpfchen noch Luftbläschen, welche das Ergebnis verfälschen können. Die Begrenzungswand kann insbesondere in dem transparenten Bereich, in dem die beiden spitzwinklig zueinander geneigten Flächen vorhanden sind, aus Kunststoff oder aus Glas ausgeführt sein.

Eine Verschleppung von Flüssigkeit durch Lichtsender und Lichtempfänger ist ausgeschlossen, da diese durch die Begrenzungswand vom Mikrokanal getrennt sind. Zudem ist die Konstruktion einfach, da Lichtsender und Lichtempfänger nebeneinander von einer Seite auf die zueinander geneigten Flächen gerichtet sind. Das System verfügt über einen deutlichen Signalhub und eine hohe Zuverlässigkeit.

Der Mikrokanal kann auch in dem von den geneigten Flächen begrenzten Bereich entsprechend dünn wie in angrenzenden Bereichen ausgeführt sein, so daß die Fluide unter günstigen Voraussetzungen an den Meßbereich herangeführt werden. Gemäß einer vorteilhaften Ausgestaltung weist er im Bereich der geneigten Flächen und den angrenzenden Bereichen einen im wesentlichen konstanten Querschnitt auf. Gemäß einer weiteren Ausgestaltung wird dies bei den zueinander geneigten Flächen dadurch erreicht, daß die der Begrenzungswand mit den geneigten Flächen gegenüberliegende Begrenzungswand zumindest in den Bereichen gegenüber den geneigten Flächen und den angrenzenden Bereichen im wesentlichen dazu parallele Flächen hat.

Zur Unterdrückung störender Lichtreflexionen ist gemäß einer weiteren Ausgestaltung die Begrenzungswand, die der Begrenzungswand mit den geneigten Flächen gegenüberliegt, zumindest in den den geneigten Flächen gegenüberliegenden Bereichen lichtabsorbierend.

Gemäß einer weiteren Ausgestaltung beträgt der Winkel zwischen den beiden Flächen etwa 80 bis 100°, vorzugsweise etwa 90°. Der Lichtsender und der Lichtempfänger können dann mit ihren Lichtachsen etwa parallel und in einem Einfallswinkel von etwa 45° auf die jeweils zugeordneten geneigten Flächen ausgerichtet sein.

Gemäß einer weiteren Ausgestaltung weist das Bauteil mehreren übereinandergeschichtete Wände auf. Diese können im wesentlichen beidseits plan ausgeführt sein, wobei eine Begrenzungswand des Mikrokanals die geneigten Flächen an einem (z.B. prismenförmigen) Vorsprung und die gegenüberliegende Begrenzungswand des Mikrokanals eine den Vorsprung aufnehmende Aufnahme aufweisen kann. Der Mikrokanal kann ausschließlich in der den Vorsprung aufnehmenden Wand ausgebildet und durch die den Vorsprung aufweisende Wand abgedeckt sein oder Abschnitte in beiden Wänden haben, die einander zu dem Mikrokanal ergänzen.

Gemäß einer weiteren vorteilhaften Ausgestaltung sind Lichtsender und Lichtempfänger in einem einzigen Bauteil ausgeführt, was vorteilhaft für Unterbringung, Montage und Ausrichtung ist.

Gemäß einer weiteren Ausgestaltung sind Lichtsender und Lichtempfänger vom mikrofluidischen Bauteil getrennt, wodurch die Austauschbarkeit des mikrofluidischen Bauteils und insbesondere seine Ausführung als Disposable begünstigt wird.

Lichtsender und Lichtempfänger können insbesondere im Bereich des sichtbaren Lichts arbeiten. Gemäß einer Ausgestaltung arbeiten sie im IR-Bereich. Der transparente Bereich des Bauteils ist dann für IR-Strahlung transparent.

Gemäß einer weiteren Ausgestaltung ist das System in ein Gerät integriert, mit dem das Bauteil lösbar verbunden ist. Damit ist es möglich, das Bauteil nach Gebrauch gegen ein anderes Bauteil auszutauschen. Bevorzugt ist das mikrofluidische Bauteil ein Disposable, d.h. ein Bauteil, das nach Gebrauch nicht wiederverwendet, sondern weggeworfen wird. Das Gerät kann insbesondere eine Aufnahme zum Einsetzen des Bauteils aufweisen. Ferner kann es eine lösbare Klemmverbindung und/oder Verriegelung und/oder magnetische Verbindung mit dem Bauteil aufweisen.

Gemäß einer weiteren vorteilhaften Ausgestaltung hat das Gerät auf der Seite des mikrofluidischen Bauteils, die gegenüber der Seite mit dem Lichtsender und dem Lichtempfänger angeordnet ist, eine Wand mit spezifischen Reflexionseigenschaften, die bei Nichtvorhandensein eines mikrofluidischen Bauteils einen spezifischen Lichteinfall des vom Lichtsender stammenden Lichts in den Lichtempfänger zur Folge hat, der sich vom Lichteinfall bei Vorhandensein eines mikrofluidischen Bauteils unterscheidet. Dies ermöglicht außer einer Detektion von Gas oder Flüssigkeit in einem Bauteil eine Detektion, ob das Bauteil überhaupt im Gerät vorhanden ist.

Gemäß einer weiteren Ausgestaltung ist das Gerät ein Handgerät.

Bei dem mikrofluidischen Bauteil kann es sich insbesondere um eine Kartusche eines Mikrodosiersystems handeln, beispielsweise um eine Kartusche eines Enzymdosierers, wie in der WO 99/10099 beschrieben.

Gemäß anderen Ausgestaltungen der Erfindung ist das mikrofluidische Bauteil ein Dosierbauteil, Analysenchip, PCR-Bauteil, Aufreinigungsbauteil, Flüssigkeitstransportbauteil, Kapillarelektrophoresebauteil oder ein Trennsäulenbauteil.

Ein Dosierbauteil dient allgemein zum möglichst exakten Abmessen und Zurverfügungstellen einer oder mehrerer Flüssigkeitsmengen (bzw. Flüssigkeitsaliquots).

Ein Analysenchip ist ein Bauteil mit Reaktionskammer(n), Detektionsstrukturen, Ein- und/oder Ausgangsports sowie fluidischen Verbindungen. Hier ist ebenfalls das Erfassen des Füllzustandes mit Flüssigkeit von Interesse.

Ein PCR-Bauteil dient dem Aufnehmen, gezielten Temperieren und Weiterleiten einer nukleinsäurehaltigen Probe mit dem Ziel, die DNA zu amplifizieren.

Ein Aufreinigungsbauteil dient dem selektiven Abtrennen von spezifischen Molekülen aus einer Probe, z.B. durch Bindung an Oberflächen, mechanische Filter oder chemische Abtrennung (Elution).

Ein Flüssigkeitstransportbauteil dient dem aktiven (z.B. über Druckdifferenz) oder passiven (z.B. über Kapillareffekt) Transportieren einer Flüssigkeit.

Ein Kapillarelektrophoresebauteil dient der räumlichen Auftrennung von Molekülen nach deren Größe (Kettenlänge), wobei die Bewegung der Moleküle durch eine elektrische Potentialdifferenz verursacht wird.

Ein Trennsäulenbauteil dient der räumlichen Auftrennung von Molekülen nach Bindungseigenschaften, wobei die Bewegung der Moleküle durch Druckdifferenz oder Kapillarität erfolgen kann.

Schließlich sieht eine Ausgestaltung der Erfindung vor, daß eine mit dem Lichtempfänger verbundene Auswerteeinrichtung beim Detektieren von Gas und/oder Flüssigkeit eine Ausgabe und/oder ein Ein- oder Ausschalten des Geräts und/oder eine Gerätefunktion auslöst.

Die Erfindung wird nachfolgend anhand der anliegenden Zeichnung erläutert, die das System in einem vertikalen Teilschnitt durch ein mikrofluidisches Bauteil zeigt.

Das mikrofluidische Bauteil 1 hat einen Grundkörper 2, auf den ein Deckel 3 geschichtet ist. Zwischen Grundkörper 2 und Deckel 3 ist ein Mikrokanal 4 oder kapillarer Mikrokanal ausgebildet, so daß Grundkörper 2 und Deckel 3 Begrenzungswände für den Mikrokanal 4 bilden.

Der Mikrokanal 4 verläuft in zwei seitlichen Abschnitten 4', 4" im wesentlichen parallel zu den Außenflächen des Grundkörpers 2 und des Deckels 3. In einem dazwischen liegenden Bereich hat er zwei spitzwinklig zueinander geneigte Abschnitte 4"', 4^{IV}, zwischen denen wiederum ein Abschnitt 4^{V} angeordnet ist, der im wesentlichen parallel zu den Außenflächen verläuft. Die Abschnitte 4"' und 4^{IV} des Mikrokanals 4 sind etwa in einem Winkel von 45° zu den Außenflächen von Grundkörper 2 und Deckel 3 ausgerichtet. Der Querschnitt des Mikrokanals 4 ist im wesentlichen konstant.

Die geneigten Abschnitte 4"', 4^{IV} des Mikrokanals 4 sind seitens des Deckels 3 von zwei zur Deckelebene etwa in einem Winkel von 45° und zueinander in etwa in einem Winkel von 90° geneigten Flächen 3', 3" begrenzt. Zu diesen Flächen 3', 3" hat der Grundkörper 2 parallele Flächen 2', 2". Zwischen den Flächen 3', 3" hat der Deckel eine zur Deckelebene parallele Fläche 3"', zu der der Grundkörper 2 eine parallele Fläche 2"' hat.

Im Beispiel ist der Grundkörper 2 im wesentlichen plan ausgeführt, wobei in seine Oberseite der Mikrokanal 4 und eine Vertiefung mit den Flächen 2', 2", 2''' eingearbeitet ist.

Der Deckel 3 ist ebenfalls im wesentlichen plan, weist jedoch die Flächen 3', 3", 3"' an einer prismenförmigen Erhebung auf. Die Erhebung greift in die Vertiefung ein und die angrenzenden Planbereiche des Deckels 3 decken die angrenzenden Abschnitte 4', 4" des Kanals ab.

Der Deckel 3 ist in dem Bereich, der an die Abschnitte 4"', 4^{IV} und 4^{V} des Mikrokanals 4 angrenzt, transparent ausgeführt. In den Abschnitten, die an die seitlichen Abschnitte 4', 4" des Mikrokanals 4 angrenzen, kann er auch undurchsichtig ausgeführt sein.

Der Grundkörper 2 ist zumindest in seinen Bereichen unterhalb des transparenten Bereichs des Deckels 3, d.h. in den Flächen 2', 2" und dem dazwischen liegenden Bereich 2"', absorbierend ausgeführt.

Das den Grundkörper 2 und den Deckel 3 aufweisende Bauteil 1 ist auf einem teilreflektierenden Substrat 5 angeordnet.

Auf der gegenüberliegenden Seite sind ein Lichtsender 6 und ein Lichtempfänger 7 mit parallelen Lichtachsen 8, 9 angeordnet. Die Lichtachse 8 des Lichtsenders 6 ist auf die geneigte Fläche 3' und die Lichtachse 9 des Lichtempfängers 7 ist auf die geneigte Fläche 3" ausgerichtet, und zwar jeweils in einem Einfallswinkel von 45°.

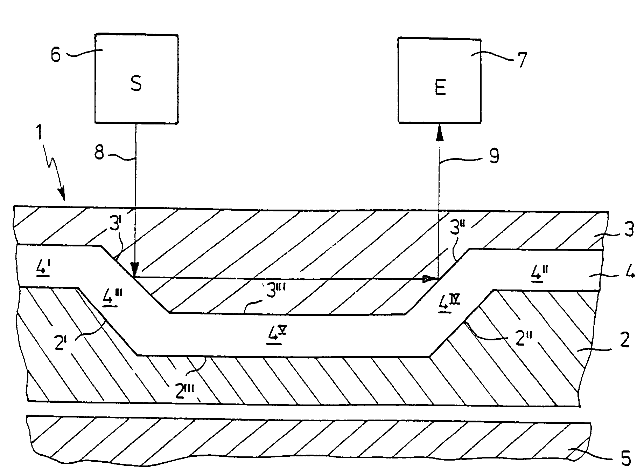

Dieses System kann die Anwesenheit oder Abwesenheit von Flüssigkeit unterhalb der Flächen 3', 3" detektieren. Befindet sich im Mikrokanal 4 an den Flächen 3', 3" Luft, so wird der Lichtstrahl durch zweimalige Totalreflexion vom Lichtsender 6 in den Lichtempfänger 7 geleitet, wie in der Figur eingezeichnet.

Liegt an einer der beiden Flächen 3', 3" eine Flüssigkeit an, so breitet sich das Licht überwiegend im Mikrokanal 4 aus, wodurch die Totalreflexion mehr oder weniger unterbunden wird und eine deutliche Signaländerung am Lichtempfänger 7 feststellbar ist.

Ist das Bauteil 1 nicht oberhalb des Substrats 5 vorhanden, so wird der vom Lichtsender 6 ausgesandte Lichtstrahl teilweise in den Lichtempfänger 7 reflektiert, wobei durch die Auswertung des vom Lichtempfänger 7 gelieferten Signals feststellbar ist, daß die Reflexion an dem Substrat erfolgt ist. Das Nichtvorhandensein des Bauteils 1 oberhalb des Substrats 5 ist damit detektierbar.

## Patentansprüche

1. System zur Detektion von Fluiden in einem mikrofluidischen Bauteil (1) mit folgenden Merkmalen:
- das mikrofluidische Bauteil (1) weist mindestens einen Mikrokanal (4) mit einer Begrenzungswand (3) auf, die in einem transparenten Bereich dem Mikrokanal (4) zugewandt zwei spitzwinklig zueinander geneigte Flächen (3', 3'') hat,
- ein Lichtsender (6) und ein Lichtempfänger (7), die außerhalb des Bauteils (1) angeordnet sind, sind so auf die geneigten Flächen (3', 3") in dem transparenten Bereich der Begrenzungswand (3) gerichtet, daß ein vom Lichtsender (6) ausgesandter Lichtstrahl bei Anliegen eines Gases im Mikrokanal (4) an den beiden Flächen (3', 3") nach Totalreflexion an den beiden Flächen (3', 3") auf den Lichtempfänger (7) trifft und beim Anliegen von Flüssigkeit im Mikrokanal (4) an mindestens einer der beiden Flächen (3' 3") in den Mikrokanal (4) eintritt und hierdurch der Lichteinfall in den Lichtempfänger (7) reduziert oder unterbunden wird.

2. System nach Anspruch 1, bei dem der Mikrokanal (4) zumindest im Bereich der geneigten Flächen (3', 3") und in angrenzenden Bereichen einen im wesentlichen konstanten Querschnitt hat.

3. System nach Anspruch 1 oder 2, bei dem die der Begrenzungswand (3) mit den geneigten Flächen (3', 3") gegenüberliegende Begrenzungswand (2) zumindest in den Bereichen gegenüber geneigten Flächen (3', 3") und in den angrenzenden Bereichen im wesentlichen parallele obere und untere Begrenzungswände (2', 2") hat.

4. System nach einem der Ansprüche 1 bis 3, bei dem die der Begrenzungswand mit den geneigten Flächen (3', 3") gegenüberliegende Begrenzungswand (2) zumindest in den den geneigten Flächen gegenüberliegenden Bereichen lichtabsorbierend ist.

5. System nach einem der Ansprüche 1 bis 4, bei dem der Winkel zwischen den beiden Flächen (3', 3") etwa 80 bis 90° beträgt.

6. System nach einem der Ansprüche 1 bis 5, bei dem das Bauteil (1) mehrere übereinandergeschichtete Wände (2, 3) aufweist.

7. System nach einem der Ansprüche 1 bis 6, bei dem Lichtsender (6) und Lichtempfänger (7) in einem einzigen Bauteil ausgeführt sind.

8. System nach einem der Ansprüche 1 bis 7, bei dem Lichtsender (6) und Lichtempfänger (7) von dem mikrofluidischen Bauteil (1) getrennt sind.

9. System nach einem der Ansprüche 1 bis 8, bei dem Lichtsender (6) und Lichtempfänger (7) im IR-Bereich arbeiten.

10. System nach einem der Ansprüche 1 bis 9, das in ein Gerät integriert ist, mit dem das mikrofluidische Bauteil (1) lösbar verbunden ist.

11. System nach einem der Ansprüche 1 bis 10, bei dem das mikrofluidische Bauteil (1) ein Disposable ist.

12. System nach Anspruch 10 oder 11, bei dem das mikrofluidische Bauteil (1) in eine Aufnahme des Gerätes eingesetzt ist.

13. System nach einem der Ansprüche 10 bis 12, bei dem das Gerät eine lösbare Klemmverbindung und/oder Verriegelung und/oder magnetische Verbindung mit dem mikrofluidischen Bauteil (1) hat.

14. System nach einem der Ansprüche 10 bis 13, bei dem das Gerät auf der Seite des mikrofluidischen Bauteils (1), die gegenüber der Seite mit dem Lichtsender (6) und Lichtempfänger (7) angeordnet ist, eine Wand (5) mit spezifischen Reflexionseigenschaften hat, die bei Nichtvorhandensein eines mikrofluidischen Bauteils (1) einen spezifischen Lichteinfall des vom Lichtsender (6) stammenden Lichts in den Lichtempfänger (7) zur Folge hat, der sich vom Lichteinfall bei Vorhandenseins eines mikrofluidischen Bauteils (1) im Gerät unterscheidet.

15. System nach einem der Ansprüche 10 bis 14, bei dem das Gerät ein Handgerät ist.

16. System nach einem der Ansprüche 1 bis 15, bei dem das mikrofluidische Bauteil (1) eine Kartusche eines Mikrodosiersystems ist.

17. System nach einem der Ansprüche 1 bis 16, bei dem das mikrofluidische Bauteil (1) ein Dosierbauteil, Analysenchip, PCR-Bauteil, Aufreinigungsbauteil, Flüssigkeitstransportbauteil, Kapillarelektrophoresebauteil oder Trennsäulenbauteil ist.

18. System nach einem der Ansprüche 1 bis 17, bei dem eine Auswerteeinrichtung ein Detektieren von Gas und/oder Flüssigkeit einer Ausgabe und/oder ein Einoder Ausschalten eines Gerätes und/oder eine Gerätefunktion auslöst.
